(19) Europäisches Patentamt / European Patent Office / Office européen des brevets

(11) **EP 4 194 503 B1**

(12) **EUROPEAN PATENT SPECIFICATION**

(45) Date of publication and mention
of the grant of the patent:
**28.02.2024 Bulletin 2024/09**

(21) Application number: **21214002.4**

(22) Date of filing: **13.12.2021**

(51) International Patent Classification (IPC):
**C08L 23/12** $^{(2006.01)}$   **C08L 23/14** $^{(2006.01)}$
**C08F 210/06** $^{(2006.01)}$

(52) Cooperative Patent Classification (CPC):
(C-Sets available)
**C08L 23/142; C08F 210/06; C08L 23/12;**
C08L 2203/162; C08L 2207/20   (Cont.)

(54) **HETEROPHASIC PROPYLENE-ETHYLENE COPOLYMER/PROPYLENE-BUTYLENE RANDOM COPOLYMER BLEND**

HETEROPHASISCHES GEMISCH AUS PROPYLEN-ETHYLEN-COPOLYMER/PROPYLEN-BUTYLEN-RANDOMCOPOLYMER

MÉLANGE DE COPOLYMÈRE HÉTÉROPHASIQUE ALÉATOIRE DE PROPYLÈNE-ÉTHYLÈNE/COPOLYMÈRE PROPYLÈNE-BUTYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Borealis AG**
**1020 Vienna (AT)**

(72) Inventors:
• **WANG, Jingbo**
  **4021 Linz (AT)**
• **GAHLEITNER, Markus**
  **4021 Linz (AT)**
• **BERNREITNER, Klaus**
  **4021 Linz (AT)**
• **NIEDERSÜß, Peter**
  **4021 Linz (AT)**
• **ORTNER, Stefan**
  **4021 Linz (AT)**
• **FAWAZ, Joel**
  **4021 Linz (AT)**
• **FRIEDRICH, Karlheinz**
  **2320 Schwechat (AT)**

(74) Representative: **Maiwald GmbH**
**Elisenhof**
**Elisenstraße 3**
**80335 München (DE)**

(56) References cited:
**EP-A1- 3 456 776   WO-A1-2020/011825**

(52) Cooperative Patent Classification (CPC): (Cont.)

C-Sets
**C08F 210/06, C08F 2/001;**
**C08F 210/06, C08F 4/65927;**
**C08L 23/12, C08L 23/16, C08L 23/142;**
**C08L 23/142, C08L 23/12, C08L 23/16;**
C08F 210/06, C08F 210/08, C08F 2500/12,
C08F 2500/34, C08F 2500/35, C08F 2500/27;
C08F 210/06, C08F 210/16, C08F 2500/12,
C08F 2500/27, C08F 2500/34, C08F 2500/17

## Description

### Field of the Invention

The present invention is directed to a heterophasic polypropylene composition comprising a heterophasic propylene-ethylene copolymer (HECO) and a propylene-butylene random copolymer (RACO), a process for producing such a heterophasic polypropylene composition and films comprising the heterophasic polypropylene composition.

### Background to the Invention

Films of heterophasic propylene copolymers are used in a wide range of areas, e.g. food packaging, such as wrapping films and containers. Such films are known for their well-balanced properties like strength, stiffness, transparency and resistance to impact, among others. Metallized films are also used as a packaging material, for example, in the form of a layered polypropylene film/aluminium foil structure.

Whilst such films have been shown to have well-balanced properties, optimising the balance of mechanical properties, optical properties and sealing properties remains a fine art, with compromises to some properties being required to obtain improvements in other areas.

In order to address these problems, multilayer films combine beneficial properties of one layer (such as mechanical performance or barrier properties) with the beneficial properties of another layer (such HLZ: JN as sealing properties). Whilst such multilayer films do result in a beneficial combination of properties, there are significant difficulties associated with recycling such films. As such, new heterophasic polypropylene compositions having a beneficial balance of mechanical, optical and sealing properties are required for use in monolayer films that are suitable for use in packaging materials and can be easily recycled.

WO 2020/011825 A1 discloses blends of metallocene-catalysed heterophasic propylene-ethylene copolymers with Ziegler-Natta-catalysed heterophasic propylene-ethylene copolymers for packaging materials.

WO 2018/077663 A1 discloses Ziegler-Natta-catalysed heterophasic propylene-ethylene copolymers making use of a double-nucleation strategy.

Whilst significant developments in this field have been made in recent years, there remains scope for the further development of monolayer films that are suitable for use in packaging materials and that can be easily recycled.

### Summary of the Invention

The present invention is based on the finding that a blend of a heterophasic propylene-ethylene copolymer and a propylene-butylene random copolymer has advantageous optical and sealing properties, whilst maintaining acceptable mechanical properties.

Therefore, in a first aspect, the present invention is directed to a heterophasic polypropylene composition (PC), comprising:

i) from 40.0 to 90.0 wt.-%, relative to the total weight of the heterophasic polypropylene composition (PC), of a heterophasic propylene-ethylene copolymer (HECO) having a melt flow rate ($MFR_2$), determined according to ISO 1133 at 230 °C at a load of 2.16 kg, in the range from 1.0 to 5.0 g/10 min and a melting temperature ($T_m$), determined by differential scanning calorimetry (DSC), in the range from 149 to 160 °C, comprising:

a) a crystalline matrix (M) being a propylene homopolymer having a content of 2,1-regiodefects as determined by quantitative $^{13}$C-NMR spectroscopy in the range from 0.05 to 1.40 mol-%; and
b) an amorphous propylene-ethylene elastomer (E);

wherein the heterophasic propylene-ethylene copolymer (HECO) is characterized in terms of its soluble fraction (SF) and crystalline fraction (CF) as determined by CRYSTEX QC analysis:

i. from 60.0 to 95.0 wt.-%, based on the total weight of the heterophasic propylene-ethylene copolymer (HECO), of a crystalline fraction (CF) having an ethylene content C2(CF), as determined by quantitative IR spectroscopy, in the range from 0.0 to 2.0 wt.-%; and
ii. from 5.0 to 40.0 wt.-%, based on the total weight of the heterophasic propylene-ethylene copolymer (HECO), of a soluble fraction (SF) having an ethylene content C2(SF), as determined by quantitative IR spectroscopy, in the range from 12.0 to 40.0 wt.-%;

ii) from 10.0 to 60.0 wt.-%, relative to the total weight of the heterophasic polypropylene composition (PC), of a propylene-butylene random copolymer (RACO), having a melt flow rate (MFR$_2$), determined according to ISO 1133 at 230 °C at a load of 2.16 kg, in the range from 0.5 to 15.0 g/10 min and a content of 1-butylene, determined by quantitative $^{13}$C-NMR spectroscopic analysis, in the range from 1.0 to 10.0 wt.-%;

iii) optionally, from 0.0001 to 1.0 wt.-%, relative to the total weight of the heterophasic polypropylene composition (PC), of a nucleating agent (NU); and

iv) optionally, from 0.1 to 5.0 wt.-% of further additives (A) different to the nucleating agent (NU).

In a further aspect, the present invention is directed to a process for producing the heterophasic polypropylene composition (PC) according to the first aspect, comprising the steps of:

a) providing the heterophasic propylene-ethylene copolymer (HECO), the propylene-butylene random copolymer (RACO), the optional nucleating agent (NU) and optional further additives (A); and

b) blending and extruding the heterophasic propylene-ethylene copolymer (HECO), the propylene-butylene random copolymer (RACO), the optional nucleating agent (NU) and optional further additives (A) at a temperature in the range from 120 to 250 °C in an extruder, preferably a twin-screw extruder, thereby generating the heterophasic polypropylene composition (PC), preferably in pellet form.

In a final aspect, the present invention is directed to a film, more preferably a cast film, comprising at least 90 wt.-%, more preferably at least 95 wt.-%, most preferably at least 98 wt.-% of the heterophasic polypropylene composition (PC) according to the first aspect.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

A propylene homopolymer is a polymer that essentially consists of propylene monomer units. Due to impurities, especially during commercial polymerization processes, a propylene homopolymer can comprise up to 0.1 mol-% comonomer units, preferably up to 0.05 mol-% comonomer units and most preferably up to 0.01 mol-% comonomer units.

A propylene copolymer is a copolymer of propylene monomer units and comonomer units, preferably selected from ethylene and C$_4$-C$_8$ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.

Heterophasic propylene copolymers typically comprise:

a) a crystalline propylene homopolymer or copolymer matrix (M); and

b) an elastomeric rubber, preferably a propylene-ethylene copolymer (E);

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a monophasic propylene copolymer in that it shows two distinct glass transition temperatures Tg which are attributed to the matrix phase and the elastomeric phase.

The present invention will now be described in more detail.

**Detailed Description**

**Heterophasic propylene-ethylene copolymer (HECO)**

One essential component of the heterophasic polypropylene composition (PC) is the heterophasic propylene-ethylene copolymer (HECO).

The heterophasic propylene-ethylene copolymer (HECO) is present in the heterophasic polypropylene composition (PC) in an amount in the range from 40.0 to 90.0 wt.-%, more preferably from 42.0 to 80.0 wt.-%, most preferably from 45.0 to 70.0 wt.-%, relative to the total weight of the heterophasic polypropylene composition (PC).

The heterophasic propylene-ethylene copolymer (HECO) comprises:

  a) a crystalline matrix (M) being a propylene homopolymer; and
  b) an amorphous propylene-ethylene elastomer (E).

The heterophasic propylene-ethylene copolymer (HECO) has a melt flow rate ($MFR_2$), determined according to ISO 1133 at 230 °C and 2.16 kg, in the range from 1.0 to 5.0 g/10 min, more preferably in the range from 1.1 to 3.5 g/10 min, most preferably in the range from 1.2 to 2.0 g/10 min.

The heterophasic propylene-ethylene copolymer (HECO) is characterized in terms of its soluble fraction (SF) and crystalline fraction (CF) as determined by CRYSTEX QC analysis.

The heterophasic propylene-ethylene copolymer (HECO) preferably has a soluble fraction (SF) content, determined according to CRYSTEX QC analysis, in the range from 5.0 to 40.0 wt.-%, more preferably in the range from 8.0 to 35.0 wt.-%, most preferably in the range from 10.0 to 30.0 wt.-%.

The heterophasic propylene-ethylene copolymer (HECO) has a crystalline fraction (CF) content, determined according to CRYSTEX QC analysis, in the range from 60.0 to 95.0 wt.-%, more preferably in the range from 65.0 to 92.0 wt.-%, most preferably in the range from 70.0 to 90.0 wt.-%.

The soluble fraction of the heterophasic propylene-ethylene copolymer (HECO), according to CRYSTEX QC analysis, has an ethylene content (C2(SF)), determined by FT-IR spectroscopy calibrated by quantitative $^{13}$C-NMR spectroscopy, in the range from 12.0 to 40.0 wt.-%, more preferably in the range from 14.0 to 35.0 wt.-%, yet more preferably in the range from 16.0 to 30.0 wt.-%, most preferably in the range from 18.0 to 27.0 wt.-%.

The crystalline fraction of the heterophasic propylene-ethylene copolymer (HECO), according to CRYSTEX QC analysis, has an ethylene content (C2(CF)), determined by FT-IR spectroscopy calibrated by quantitative $^{13}$C-NMR spectroscopy, in the range from 0.0 to 2.0 wt.-%, more preferably in the range from 0.0 to 1.0 wt.-%, most preferably in the range from 0.0 to 0.7 wt.-%.

The soluble fraction of the heterophasic propylene-ethylene copolymer (HECO), according to CRYSTEX QC analysis, preferably has an intrinsic viscosity (iV(SF)), determined according to DIN ISO 1628/1, in the range from 1.00 to 4.00 dL/g, more preferably in the range from 1.20 to 3.50 dL/g, yet more preferably in the range from 1.40 to 3.20 dL/g, even further preferably in the range from 1.60 to 3.00 dL/g, most preferably in the range from 2.00 to 2.80 dL/g.

The heterophasic propylene-ethylene copolymer (HECO) preferably has an intrinsic viscosity, determined according to DIN ISO 1628/1, of the crystalline fraction (iV(CF)), according to CRYSTEX QC analysis, in the range from 1.00 to 4.00 dL/g, more preferably in the range from 1.20 to 3.50 dL/g, yet more preferably in the range from 1.40 to 3.20 dL/g, even further preferably in the range from 1.60 to 3.00 dL/g, most preferably in the range from 2.00 to 2.80 dL/g.

The heterophasic propylene-ethylene copolymer (HECO) preferably has an intrinsic viscosity (iV), determined according to DIN ISO 1628/1, in the range from 1.00 to 4.00 dL/g, more preferably in the range from 1.20 to 3.50 dL/g, yet more preferably in the range from 1.40 to 3.20 dL/g, even further preferably in the range from 1.60 to 3.00 dL/g, most preferably in the range from 2.00 to 2.80 dL/g.

The heterophasic propylene-ethylene copolymer (HECO) preferably has has an ethylene content (C2), determined according to quantitative FT-IR spectroscopy, calibrated by quantitative $^{13}$C-NMR spectroscopy, in the range from 1.5 to 9.0 wt.-%, more preferably in the range from 2.0 to 8.0 wt.-%, most preferably in the range from 2.3 to 7.0 wt.-%.

The heterophasic propylene-ethylene copolymer (HECO) has a first melting temperature ($T_m$), determined by differential scanning calorimetry (DSC), in the range from 149 to 160 °C, more preferably in the range from 150 to 159 °C, most preferably in the range from 151 to 158 °C.

The melting enthalpy ($H_m$) associated with the first melting temperature is preferably in the range from 50 to 100 J/g, more preferably in the range from 60 to 90 J/g, most preferably in the range from 65 to 85 J/g.

It is preferred that the crystalline matrix (M) of the heterophasic propylene-ethylene copolymer (HECO) has a melt flow rate ($MFR_2$), determined according to ISO 1133 at 230 °C at a load of 2.16 kg, in the range from 1.0 to 5.0 g/10 min, more preferably in the range from 1.2 to 4.0 g/10 min, most preferably in the range from 1.5 to 3.5 g/10 min.

The crystalline matrix (M) of the heterophasic propylene-ethylene copolymer (HECO) has a content of 2,1-regiodefects as determined by quantitative $^{13}$C-NMR spectroscopy in the range from 0.05 to 1.40 mol-%, more preferably in the range from 0.10 to 1.00 mol-%, yet more preferably in the range from 0.20 to 0.90 mol-%, most preferably in the range from 0.45 to 0.85 mol-%.

The presence of 2,1-regiodefects is indicative that the heterophasic propylene-ethylene copolymer (HECO) has been polymerized in the presence of a single site catalyst system, rather than in the presence of a Ziegler-Natta catalyst system.

It is, therefore, also preferred that the heterophasic propylene-ethylene copolymer (HECO) has been polymerized in the presence of a single site catalyst (SSC), more preferably a metallocene catalyst.

Suitable heterophasic propylene-ethylene copolymers may be commercially available from one of a number of well-known commercial sources, or the skilled person may produce the heterophasic propylene-ethylene copolymer (HECO) by any method known in the art. Whilst the heterophasic propylene-ethylene copolymer (HECO) may be prepared by melt-blending the crystalline matrix (M) and the amorphous propylene-ethylene elastomer (E), it is preferred that the crystalline matrix (M) and the amorphous propylene-ethylene elastomer (E) are prepared in successive steps of a sequential polymerization process, wherein the heterophasic propylene-ethylene copolymer (HECO) is formed without the need for mechanical blending, in a so-called reactor blend.

**Propylene-butylene random copolymer (RACO)**

Another essential component of the heterophasic polypropylene composition (PC) is the propylene-butylene random copolymer (RACO).

The propylene-butylene random copolymer (RACO) is present in the heterophasic polypropylene composition (PC) in an amount in the range from 10.0 to 60.0 wt.-%, more preferably from 20.0 to 58.0 wt.-%, most preferably from 30.0 to 55.0 wt.-%, relative to the total weight of the heterophasic polypropylene composition (PC).

As would be understood by the person skilled in the art, in contrast to the heterophasic propylene-ethylene copolymer (HECO), the propylene-butylene random copolymer (RACO) is monophasic.

The propylene-butylene random copolymer (RACO) is a random copolymer with propylene monomer units and 1-butylene comonomer units.

The propylene-butylene random copolymer (RACO) has a melt flow rate ($MFR_2$), determined according to ISO 1133 at 230 °C at a load of 2.16 kg, in the range from 0.5 to 15.0 g/10 min, more preferably in the range from 0.8 to 10.0 g/10 min, yet more preferably in the range from 1.0 to 8.0 g/10 min, most preferably in the range from 1.0 to 4.0 g/10 min.

The propylene-butylene random copolymer (RACO) has a content of 1-butylene, determined by quantitative $^{13}$C-NMR spectroscopic analysis, in the range from 1.0 to 10.0 wt.-%, more preferably in the range from 3.0 to 9.0 wt.-%, most preferably in the range from 5.0 to 8.0 wt.-%.

It is preferred that the propylene-butylene random copolymer (RACO) has a melting temperature ($T_m$), determined by differential scanning calorimetry (DSC), in the range from 120 to 145 °C, more preferably in the range from 130 to 144 °C, most preferably in the range from 135 to 142 °C.

It is also preferred that the propylene-butylene random copolymer (RACO) has a xylene cold soluble (XCS) content, determined according to ISO 16152, in the range from 0.1 to 10.0 wt.-%, more preferably in the range from 0.3 to 5.0 wt.-%, most preferably in the range from 0.5 to 4.0 wt.-%.

The propylene-butylene random copolymer (RACO) preferably has a content of 2,1-regiodefects as determined by quantitative $^{13}$C-NMR spectroscopy in the range from 0.05 to 1.40 mol-%, more preferably in the range from 0.10 to 1.00 mol-%, yet more preferably in the range from 0.20 to 0.90 mol-%, most preferably in the range from 0.45 to 0.85 mol-%.

It is thus preferred that the propylene-butylene random copolymer (RACO) has been polymerized in the presence of a single site catalyst (SSC), more preferably a metallocene catalyst.

**Nucleating agent (NU)**

An optional component of the heterophasic polypropylene composition (PC) is the nucleating agent (NU).

If present, the nucleating agent (NU) is present in the heterophasic polypropylene composition (PC) in an amount in the range from 0.0001 to 1.0 wt.-%, more preferably from 0.001 to 0.50 wt.-%, most preferably from 0.01 to 0.20 wt.-%, relative to the total weight of the heterophasic polypropylene composition (PC).

The nucleating agent may be selected from any well-known nucleating agents known in the art, including polymeric nucleating agents, benzoate nucleating agents, sorbitol-based nucleating agents, particulate nucleating agents, such as talc, and phosphate-based nucleating agents

**Additives (A)**

Another optional component of the heterophasic polypropylene composition (PC) is further additives (A) different to the nucleating agent (NU).

If present, the additives (A) are present in the heterophasic polypropylene composition (PC) in an amount in the range from 0.1 to 5.0 wt.-%, relative to the total weight of the heterophasic polypropylene composition (PC).

The additives (A) are preferably selected from antioxidants, UV-stabilizers, anti-scratch agents, mold release agents, acid scavengers, lubricants, anti-static agents, colorant or pigment, and mixtures thereof. Such additives are well known to the person skilled in the art and can be selected without difficulty.

It is understood that the content of additives (A), given with respect to the total weight of the heterophasic polypropylene composition (PC), includes any carrier polymers used to introduce the additives to said heterophasic polypropylene composition (PC), i.e. masterbatch carrier polymers. An example of such a carrier polymer would be a polypropylene homopolymer in the form of powder.

**Heterophasic polypropylene composition (PC)**

The heterophasic polypropylene composition (PC) of the present invention comprises, more preferably consists of:

i) from 40.0 to 90.0 wt.-%, more preferably from 42.0 to 80.0 wt.-%, most preferably from 45.0 to 70.0 wt.-%, relative to the total weight of the heterophasic polypropylene composition (PC), of the heterophasic propylene-ethylene copolymer (HECO);

ii) from 10.0 to 60.0 wt.-%, more preferably from 20.0 to 58.0 wt.-%, most preferably from 30.0 to 55.0 wt.-%, relative to the total weight of the heterophasic polypropylene composition (PC), of the propylene-butylene random copolymer (RACO);

iii) optionally, from 0.0001 to 1.0 wt.-%, more preferably from 0.001 to 0.50 wt.-%, most preferably from 0.01 to 0.20 wt.-%, relative to the total weight of the heterophasic polypropylene composition (PC), of the nucleating agent (NU); and

iv) optionally, from 0.1 to 5.0 wt.-% of further additives (A) different to the nucleating agent (NU).

In the broadest sense, the heterophasic polypropylene composition (PC) of the present invention comprises, more preferably consists of:

i) from 40.0 to 90.0 wt.-%, relative to the total weight of the heterophasic polypropylene composition (PC), of the heterophasic propylene-ethylene copolymer (HECO);

ii) from 10.0 to 60.0 wt.-%, relative to the total weight of the heterophasic polypropylene composition (PC), of the propylene-butylene random copolymer (RACO);

iii) optionally, from 0.0001 to 1.0 wt.-%, relative to the total weight of the heterophasic polypropylene composition (PC), of the nucleating agent (NU); and

iv) optionally, from 0.1 to 5.0 wt.-% of further additives (A) different to the nucleating agent (NU).

It is preferred that the heterophasic polypropylene composition (PC) of the present invention comprises, more preferably consists of:

i) from 42.0 to 80.0 wt.-%, relative to the total weight of the heterophasic polypropylene composition (PC), of the heterophasic propylene-ethylene copolymer (HECO);

ii) from 20.0 to 58.0 wt.-%, relative to the total weight of the heterophasic polypropylene composition (PC), of the propylene-butylene random copolymer (RACO);

iii) optionally, from 0.001 to 0.50 wt.-%, relative to the total weight of the heterophasic polypropylene composition (PC), of the nucleating agent (NU); and

iv) optionally, from 0.1 to 5.0 wt.-% of further additives (A) different to the nucleating agent (NU).

It is particularly preferred that the heterophasic polypropylene composition (PC) of the present invention comprises, more preferably consists of:

i) from 45.0 to 70.0 wt.-%, relative to the total weight of the heterophasic polypropylene composition (PC), of the heterophasic propylene-ethylene copolymer (HECO);

ii) from 30.0 to 55.0 wt.-%, relative to the total weight of the heterophasic polypropylene composition (PC), of the propylene-butylene random copolymer (RACO);

iii) optionally, from 0.01 to 0.20 wt.-%, relative to the total weight of the heterophasic polypropylene composition (PC), of the nucleating agent (NU); and

iv) optionally, from 0.1 to 5.0 wt.-% of further additives (A) different to the nucleating agent (NU).

In one embodiment, the heterophasic polypropylene composition (PC) comprises, preferably consists of, the heterophasic polypropylene-ethylene copolymer (HECO) and the propylene-butylene random copolymer (RACO).

In an alternative embodiment, the heterophasic polypropylene composition (PC) comprises, preferably consists of, the heterophasic polypropylene-ethylene copolymer (HECO), the propylene-butylene random copolymer (RACO), and the nucleating agent (NU).

In a further embodiment, the heterophasic polypropylene composition (PC) comprises, preferably consists of, the heterophasic polypropylene-ethylene copolymer (HECO), the propylene-butylene random copolymer (RACO), and additives (A).

In a final embodiment, the heterophasic polypropylene composition (PC) comprises, preferably consists of, the heterophasic polypropylene-ethylene copolymer (HECO), the propylene-butylene random copolymer (RACO), the nucleating agent (NU), and additives (A).

The heterophasic polypropylene composition (PC) preferably has a melt flow rate ($MFR_2$), determined according to ISO 1133 at 230 °C at a load of 2.16 kg, in the range from 1.0 to 10.0 g/10 min, more preferably in the range from 1.0 to 5.0 g/10 min, most preferably in the range from 1.0 to 3.0 g/10 min.

The heterophasic polypropylene composition (PC) preferably has an ethylene content (C2), determined by quantitative $^{13}$C-NMR spectroscopic analysis, in the range from 1.0 to 5.0 wt.-%, more preferably in the range from 1.5 to 4.0 wt.-%, most preferably in the range from 2.0 to 3.5 wt.-%.

The heterophasic polypropylene composition (PC) preferably has a 1-butylene content (C4), determined by quantitative $^{13}$C-NMR spectroscopic analysis, in the range from 1.0 to 5.0 wt.-%, more preferably in the range from 1.5 to 4.0 wt.-%, most preferably in the range from 1.8 to 3.5 wt.-%.

The heterophasic polypropylene composition (PC) preferably has a xylene cold soluble (XCS) content, determined according to ISO 16152, in the range from 5.0 to 20.0 wt.-%, more preferably in the range from 8.0 to 19.0 wt.-%, most preferably in the range from 10.0 to 18.0 wt.-%.

The heterophasic polypropylene composition (PC) preferably has a crystallization temperature ($T_c$), determined by differential scanning calorimetry (DSC), in the range from 114.0 to 130.0 °C, more preferably in the range from 115.0 to 127.0 °C, most preferably in the range from 116.0 to 125.0 °C.

The heterophasic polypropylene composition (PC) preferably has a first melting temperature ($T_{m1}$), determined by differential scanning calorimetry (DSC), in the range from 149 to 162 °C, more preferably in the range from 150 to 159 °C, most preferably in the range from 151 to 156 °C.

It is further preferred that the melting enthalpy associated with the first melting temperature ($H_{m1}$) is in the range from 50 to 100 J/g, more preferably in the range from 55 to 95 J/g, most preferably in the range from 60 to 90 J/g.

This first melting temperature is believed to be associated with the crystalline matrix (M) of the heterophasic propylene-ethylene copolymer (HECO).

The heterophasic polypropylene composition (PC) preferably has a second melting temperature ($T_{m2}$), determined by differential scanning calorimetry (DSC), in the range from 125 to 145 °C, more preferably in the range from 127 to 141 °C, most preferably in the range from 129 to 138 °C.

It is further preferred that the melting enthalpy associated with the second melting temperature ($H_{m2}$) is in the range from 0.1 to 15.0 J/g, more preferably in the range from 0.2 to 10.0 J/g, most preferably in the range from 0.3 to 7.0 J/g.

This second melting temperature is believed to be associated with the propylene-butylene random copolymer (RACO).

The heterophasic polypropylene composition (PC) preferably has a flexural modulus, determined according to ISO 178 on $80 \times 10 \times 4$ mm$^3$ injection-moulded specimens prepared according to ISO 19069-2, in the range from 850 to 2000 MPa, more preferably in the range from 900 to 1700 MPa, most preferably in the range from 950 to 1500 MPa.

The heterophasic polypropylene composition (PC) preferably has a Charpy Notched Impact Strength (NIS) measured according to ISO 179-1 eA at 23 °C on $80 \times 10 \times 4$ mm$^3$ injection-moulded specimens prepared according to ISO 19069-2, in the range from 8.0 to 100 kJ/m$^2$, more preferably in the range from 25.0 to 85.0 kJ/m$^2$, most preferably in the range from 40.0 to 70.0 kJ/m$^2$.

It is also preferred that the heterophasic polypropylene composition (PC) has a haze value, determined according to ASTM D1003 on a 50 $\mu$m cast film specimen, in the range from 0.0 to 6.0%, more preferably in the range from 0.0 to 4.0%, most preferably in the range from 0.0 to 3.5%.

It is preferred that a 50 $\mu$m cast film specimen prepared from the heterophasic polypropylene composition (PC) has a tensile modulus in the machine direction (TM-MD), determined according to ISO 527-3 at 23 °C, in the range from 500 to 1200 MPa, more preferably in the range from 550 to 1100 MPa, most preferably in the range from 600 to 900 MPa.

It is also preferred that a 50 $\mu$m cast film specimen prepared from the heterophasic polypropylene composition (PC) has a tensile modulus in the transverse direction (TM-TD), determined according to ISO 527-3 at 23 °C, in the range from 400 to 1200 MPa, more preferably in the range from 450 to 1100 MPa, most preferably in the range from 500 to 900 MPa.

It is furthermore preferred that a 50 $\mu$m cast film specimen prepared from the heterophasic polypropylene composition (PC) has a sealing initiation temperature (SIT) in the range from 115 to 130 °C, more preferably in the range from 117 to 127 °C, most preferably in the range from 119 to 125 °C.

It is particularly preferred that the difference between the first melting temperature and the sealing initiation temperature ($T_{m1}$-SIT) is in the range from 28 to 40 °C, more preferably in the range from 29 to 37 °C, most preferably in the range from 30 to 35 °C.

**Process**

In a further aspect, the present invention is directed to a process for producing the heterophasic polypropylene composition (PC) according to the first aspect, comprising the steps of:

a) providing the heterophasic propylene-ethylene copolymer (HECO), the propylene-butylene random copolymer (RACO), the optional nucleating agent (NU) and optional further additives (A); and

b) blending and extruding the heterophasic propylene-ethylene copolymer (HECO), the propylene-butylene random copolymer (RACO), the optional nucleating agent (NU) and optional further additives (A) at a temperature in the range from 120 to 250 °C in an extruder, preferably a twin-screw extruder, thereby generating the heterophasic polypropylene composition (PC), preferably in pellet form.

In particular, it is preferred to use a conventional compounding or blending apparatus, e.g. a Banbury mixer, a 2-roll rubber mill, Buss-co-kneader or a twin-screw extruder. More preferably, mixing is accomplished in a co-rotating twin-screw extruder. The polymer materials recovered from the extruder are usually in the form of pellets.

All fall back positions for the heterophasic polypropylene composition (PC) described above and the individual components thereof are applicable mutatis mutandis to the process of the further aspect.

In one embodiment, the heterophasic polypropylene composition is obtainable by, more preferably obtained by, the process of the further aspect.

**Article**

In a final aspect, the present invention is directed to a film comprising at least 90 wt.-%, more preferably at least 95 wt.-%, most preferably at least 98 wt.-% of the heterophasic polypropylene composition (PC) according to the first aspect.

It is appreciated that the film cannot contain more than 100 wt.-% of the heterophasic polypropylene composition (PC).

In one particularly preferred embodiment, the film consists of the heterophasic polypropylene composition (PC).

The film is preferably either a cast film or a blown film, most preferably a cast film.

The film, more preferably the cast film, preferably has a thickness in the range from 1.0 to 100 μm, more preferably in the range from 2.5 to 80 μm, yet more preferably in the range from 5.0 to 60 μm, most preferably in the range from 20 to 55 μm.

The film, more preferably the cast film, may be monolayer film or may alternatively be a single layer within a multilayer film, e.g. as a sealing layer. Preferably the film, more preferably the cast film, is a monolayer film.

The film, more preferably the cast film, preferably has a tensile modulus in the machine direction (TM-MD), determined according to ISO 527-3 at 23 °C, in the range from 500 to 1200 MPa, more preferably in the range from 550 to 1100 MPa, most preferably in the range from 600 to 900 MPa.

The film, more preferably the cast film, preferably has a tensile modulus in the transverse direction (TM-TD), determined according to ISO 527-3 at 23 °C, in the range from 400 to 1200 MPa, more preferably in the range from 450 to 1100 MPa, most preferably in the range from 500 to 900 MPa.

The film, more preferably the cast film, preferably has a haze value, determined according to ASTM D1003, in the range from 0.0 to 6.0%, more preferably in the range from 0.0 to 4.0%, most preferably in the range from 0.0 to 3.5%.

The film, more preferably the cast film, preferably has a sealing initiation temperature (SIT) in the range from 115 to 130 °C, more preferably in the range from 117 to 127 °C, most preferably in the range from 119 to 125 °C.

It is particularly preferred that the difference between the first melting temperature of the heterophasic polypropylene composition (PC) and the sealing initiation temperature of the film ($T_{m1}$-SIT) is in the range from 28 to 40 °C, more preferably in the range from 29 to 37 °C, most preferably in the range from 30 to 35 °C.

The films according to the present invention are highly useful for use in various packaging applications or for producing packaging articles, wherein applications related to food packaging are preferred.

Packaging articles comprising the heterophasic polypropylene composition (PC) include, for example, bags, pouches, wrapping or collation films and the like.

**EXAMPLES**

**1. Measuring methods**

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Avance III 500 NMR spectrometer operating at 500.13 and 125.76 MHz for $^{1}H$ and $^{13}C$ respectively. All spectra were recorded using a $^{13}C$ optimized 7 mm magic-angle spinning (MAS) probehead at 180 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the $\alpha B2$ sites at 43.6 ppm accounting for the number of reporting sites per comonomer:

$$B = I_{\alpha B2} \, / \, 2$$

The amount of consecutively incorporated 1-butene in PBBP sequences was quantified using the integral of the $\alpha\alpha B2B2$ site at 40.5 ppm accounting for the number of reporting sites per comonomer:

$$BB = 2 * I_{\alpha\alpha B2B2}$$

In presence of BB the value of B must be corrected for the influence of the $\alpha B2$ sites resulting from BB:

$$B = (I_{\alpha B2} \, / \, 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the $S\beta\beta$ sites at 24.3 ppm accounting for the number of reporting sites per comonomer:

$$E = I_{S\beta\beta}$$

If characteristic signals corresponding to consecutive incorporation of ethylene in PEE sequence was observed the $S\beta\delta$ site at 27.0 ppm was used for quantification:

$$EE = I_{S\beta\delta}$$

Characteristic signals corresponding to regio defects were observed {resconi00). The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent $S\alpha\beta$ signals at 34.8 ppm and 34.4 ppm respectively and the $T\gamma\gamma$ at 33.7 ppm.

The amount of isolated 2,1-erythro regio defects ($P_{21e\ isolated}$) was quantified using the integral of the methylene site at 42.4 ppm ($I_{e9}$):

**EP 4 194 503 B1**

$$P_{2\text{1e isolated}} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$P_{2\text{1e isolated}} = I_{e9}$$

The amount of propylene was quantified based on the $S\alpha\alpha$ methylene sites at 46.7 ppm including all additional propylene units not covered by $S\alpha\alpha$ e.g. the factor $3*P_{2\text{1e isolated}}$ accounts for the three missing propylene units from isolated 2,1-erythro regio defects:

$$P_{total} = I_{S\alpha\alpha} + 3*P_{2\text{1e isolated}} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\text{-}\%] = 100 * fB$$

$$E\ [mol\text{-}\%] = 100 * fE$$

The weight percent comonomer incorporation was calculated from the mole fractions:

$$B\ [wt.\text{-}\%] = 100 * ( fB * 56.11 ) / ( (fE * 28.05) + (fB * 56.11) + ((1\text{-}(fE+fB)) * 42.08) )$$

$$E\ [wt.\text{-}\%] = 100 * ( fE * 28.05 ) / ( (fE * 28.05) + (fB * 56.11) + ((1\text{-}(fE+fB)) * 42.08) )$$

The mole percent of isolated 2,1-erythro regio defects was quantified with respect to all propylene:

$$[21e]\ mol\text{-}\% = 100 * P_{2\text{1e isolated}} / P_{total}$$

The mole percent of 2,1 regio defects adjacent to ethylene was quantified with respect to all propylene:

$$[E21]\ mol\text{-}\% = 100 * P_{E21} / P_{total}$$

The total amount of 2,1 defects was quantified as following:

$$[21]\ \text{mol-}\% = [21e] + [E21]$$

Characteristic signals corresponding to other types of regio defects (2,1-threo, 3,1 insertion) were not observed {resconi00}.

Literature (as referred to above):

| klimke06 | Klimke, K., Parkinson, M., Piel, C., Kaminsky, W., Spiess, H.W., Wilhelm, M., Macromol. Chem. Phys. 2006;207:382. |
|---|---|
| parkinson07 | Parkinson, M., Klimke, K., Spiess, H.W., Wilhelm, M., Macromol. Chem. Phys. 2007;208:2128. |
| pollard04 | Pollard, M., Klimke, K., Graf, R., Spiess, H.W., Wilhelm, M., Sperber, O., Piel, C., Kaminsky, W., Macromolecules 2004;37:813. |
| filip05 | Filip, X., Tripon, C., Filip, C., J. Mag. Resn. 2005, 176, 239 |
| griffin07 | Griffin, J.M., Tripon, C., Samoson, A., Filip, C., and Brown, S.P., Mag. Res. in Chem. 2007 45, S1, S198. |
| castignolles09 | Castignolles, P., Graf, R., Parkinson, M., Wilhelm, M., Gaborieau, M., Polymer 50 (2009) 2373. |
| resconi00 | Resconi, L., Cavallo, L., Fait, A., Piemontesi, F., Chem. Rev. 2000, 100, 1253. |
| brandolini01 | A.J. Brandolini, D.D. Hills, "NMR spectra of polymers and polymer additives", Marcel Deker Inc., 2000 |

## Crystex analysis

### *Crystalline and soluble fractions method*

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods. International Journal of Polymer Analysis and Characterization, 25:8, 581-596)

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3)^2 + f*\text{Abs(CH)}*\text{Abs(CH}_3)$$

$$(\text{Equation 1})$$

$$\text{CH}_3/1000\text{C} = a + b*\text{Abs(CH)} + c* \text{Abs(CH}_3) + d * (\text{Abs(CH}_3)/\text{Abs(CH)}) + e * (\text{Abs(CH}_3)/\text{Abs(CH)})^2$$

$$(\text{Equation 2})$$

The constants a to e for equation 1 and a to f for equation 2 were determined by using least square regression analysis.

The $\text{CH}_3/1000\text{C}$ is converted to the ethylene content in wt.-% using following relationship:

$$\text{Wt.-\% (Ethylene in EP Copolymers)} = 100 - CH_3/1000TC * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{Wt.-\% XS} = 1{,}01 * \text{Wt.-\% SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV \ (dL/g) = a * Vsp/c \qquad \text{(equation 5)}$$

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

**Intrinsic viscosity**

The intrinsic viscosity (iV) was measured according to DIN ISO 1628/1, October 1999, in Decalin at 135 °C.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**The xylene soluble fraction at room temperature (XCS, wt.-%)**

The amount of the polymer soluble in xylene was determined at 25 °C according to ISO 16152; 5th edition; 2005-07-01.

**DSC analysis, melting temperature ($T_m$) and heat of fusion ($H_f$), crystallization temperature ($T_c$) and heat of crystallization ($H_c$)**

These properties were measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) were determined from the cooling step, while melting temperature ($T_m$) and melting enthalpy ($H_m$) were determined from the second heating step.

**The Flexural Modulus**

The flexural modulus was determined according to ISO 178 method A (3-point bending test) on 80 mm $\times$ 10 mm $\times$ 4 mm (i.e. $80\times10\times4$ mm$^3$) specimens. Following the standard, a test speed of 2 mm/min and a span length of 16 times the thickness was used. The testing temperature was $23\pm2$ °C. Injection moulding was carried out according to ISO 19069-2 using a melt temperature of 230 °C for all materials irrespective of material melt flow rate.

**Notched impact strength (NIS)**

The Charpy notched impact strength (NIS) was measured according to ISO 179 1eA at +23 °C or -20 °C, using injection moulded bar test specimens of $80\times10\times4$ mm$^3$ prepared in accordance with ISO 19069-2 using a melt temperature of 230 °C for all materials irrespective of material melt flow rate.

**Haze**

Haze was determined according to ASTM D1003-00 on cast films of 50 $\mu$m thickness produced on a monolayer cast film line with a melt temperature of 220 °C and a chill roll temperature of 20 °C as indicated below.

**Tensile Modulus**

Tensile Modulus in both the machine (MD) and transverse (TD) directions was determined according to ISO 527-3 at 23 °C on cast films of 50 $\mu$m thickness produced on a monolayer cast film line with a melt temperature of 220 °C and a chill roll temperature of 20 °C as indicated below. Testing was performed at a cross head speed of 1 mm/min up to the yield limit and at 10 mm/min up to specimen breakage.

**Sealing Initiation Temperature (SIT)**

This method was used to determine the sealing window (sealing temperature range) of films. The procedure is similar to hot tack measurement, but in contrast to hot tack the sealing range applies to the strength of the seal after it had cooled (delay time of 30 s).

Sealing range = (Seal initiation temperature until Seal end temperature)

The determined results give the user a quantitatively useful indication of the strength of the sealed films and show the temperature range for optimal sealing.
The temperature interval is set by default to 5 °C, but can be reduced to 1 °C when the curve shows a sharp increase or decrease in the force values between two temperature steps in order to represent a better curve profile.
Deviating from ASTM F1921 - 12, the test parameters sealing pressure, cooling time and test speed are modified. The determination of the force/temperature curve is continued until thermal failure of the film. In addition to failure mode evaluations described in the standard, additional failure modes are used. To characterize the material, the measured values sealing range start temperature (SIT), temperature at max. force (MAX) and sealing range end temperature (SET) are also determined.

Standard conditions:

Conditioning time: > 96 h
Sealing jaws dimension: 50x5 mm
Sealing jaws shape: flat
Sealing jaws coating: Niptef
Sealing temperature: ambient - 240 °C
Sealing temperature interval: 5 °C
Sealing time: 1 sec
Delay time: 30 sec
Sealing pressure: 0,4 N/mm$^2$ (PE); 0,67 N/mm$^2$ (PP)
Grip separation rate: 42 mm/sec
Sealing initiation force: 5 N

Sample width: 25 mm

Results:

The output of this method is a sealing curve.

The lower limit (**S**ealing **I**nitiation **T**emperature - SIT) is the lowest sealing temperature at which a sealing force of at least 5 N is achieved

**2. Examples**

**2.1 Synthesis of heterophasic propylene-ethylene copolymers (HECOs)**

The catalyst used for the inventive heterophasic copolymers (HECO1 and HECO2) was *Anti*-dimethylsilanediyl[2-methyl-4,8-di(3,5-dimethylphenyl)-1,5,6,7-tetrahydro-s-indacen-1-yl] [2-methyl-4-(3,5-dimethylphenyl)-5-methoxy-6-tert-butylinden-1-yl] zirconium dichloride as disclosed in WO 2020/239598 A1 as ICS3.

**Preparation of MAO-silica support**

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressurising and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90 °C and stirred at 90 °C for additional two hours. The slurry was allowed to settle and the mother liquor was filtered off. The catalyst was washed twice with toluene (22 kg) at 90 °C, following by settling and filtration. The reactor was cooled off to 60 °C and the solid was washed with heptane (22.2 kg). Finally MAO treated $SiO_2$ was dried at 60 °C under nitrogen flow for 2 hours and then for 5 hours under vacuum (-0.5 barg) with stirring. MAO treated support was collected as a free-flowing white powder found to contain 12.2% Al by weight.

**Catalyst preparation**

30 wt.-% MAO in toluene (0.7 kg) was added into a steel nitrogen blanked reactor via a burette at 20 °C. Toluene (5.4 kg) was then added under stirring. The catalyst as cited above (93 g) was added from a metal cylinder followed by flushing with 1 kg toluene. The mixture was stirred for 60 minutes at 20 °C . Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60 °C for 2h and additionally for 5 h under vacuum (-0.5 barg) under stirring. Dried catalyst was sampled in the form of pink free flowing powder containing 13.9% Al and 0.11% Zr.

For the polymerization process of the comparative HECO3, a Ziegler-Natta type catalyst as used for the inventive examples of WO 2016/066446 A1 and pre-polymerized with vinylcyclohexane to achieve nucleation with poly(vinylcyclohexane) was used.

For the polymerization process of the comparative HECO4, the same catalyst was used, except that no pre-polymerization with vinylcyclohexane was undertaken (i.e. simply the catalyst used for the inventive examples of WO 2016/066446 A1 was used).

Nucleation by prepolymerization with vinylcyclohexane is described in EP 2 960 256 B1 and EP 2 960 279 B1 in detail. Dicyclopentyl dimethoxy silane (donor D) was used as external donor and triethyl aluminium (TEAL) was used as co-catalyst both HECO3 and HECO4.

The subsequent polymerizations have been effected under the following conditions:

**Table 1** Polymerization conditions for the HECOs

|  |  | HECO1 | HECO2 | HECO3 | HECO4 |
|---|---|---|---|---|---|
| **Prepolymerization** |  |  |  |  |  |
| TEAL/Ti ratio | mol/mol | - | - | 173 | 173 |
| TEAL/donor ratio | mol/mol | - | - | 8.0 | 8.0 |

(continued)

| | | HECO1 | HECO2 | HECO3 | HECO4 |
|---|---|---|---|---|---|
| **Prepolymerization** | | | | | |
| Temperature | [°C] | 20 | 20 | 30 | 30 |
| Pressure | [barg] | 53 | 53 | 53 | 53 |
| H2/C3 | [mol/kmol] | 0.07 | 0.11 | 0.10 | 0.10 |
| **Loop reactor** | | | | | |
| Temperature | [°C] | 75 | 75 | 80 | 80 |
| Split | [wt.-%] | 45 | 31 | 39 | 34 |
| H2/C3 | [mol/kmol] | 0.11 | 0.11 | 0.40 | 0.10 |
| $MFR_2$ | [g/10 min] | 1.65 | 1.65 | 2.4 | 0.32 |
| **1st Gas phase reactor** | | | | | |
| Temperature | [°C] | 80 | 80 | 80 | 70 |
| Split | [wt.-%] | 42 | 42 | 50 | 53 |
| H2/C3 | [mol/kmol] | 0.99 | 0.99 | 7.0 | 1.1 |
| $MFR_2$ | [g/10 min] | 1.83 | 1.83 | 2.4 | 0.30 |
| **2nd Gas phase reactor** | | | | | |
| Temperature | [°C] | 70 | 70 | 75 | 70 |
| Split | [wt.-%] | 13 | 27 | 11 | 13 |
| H2/C2 | [mol/kmol] | 1.96 | 1.96 | 223 | 209 |
| C2/C3 | [mol/kmol] | 867 | 867 | 551 | 503 |
| $MFR_2$ | [g/10 min] | 1.49 | 1.40 | 3.0 | 0.40 |
| **Final Properties (pellet)** | | | | | |
| $MFR_2$ | [g/10 min] | 1.49 | 1.40 | 3.0 | 1.30 |
| SF | [wt.-%] | 13.1 | 27.6 | 13.9 | 15 |
| CF | [wt.-%] | 86.9 | 72.4 | 86.1 | 85 |
| C2(total) | [wt.-%] | 3.1 | 6.2 | 4.5 | 6.2 |
| C2(SF) | [wt.-%] | 23.2 | 20.4 | 28.1 | 33.9 |
| C2(CF) | [wt.-%] | 0.55 | 0.0 | 2.2 | 2.4 |
| iV(total) | [dL/g] | 2.54 | 2.50 | 2.60 | 2.79 |
| iV(SF) | [dL/g] | 2.26 | 2.60 | 1.67 | 1.94 |
| iV(CF) | [dL/g] | 2.54 | 2.50 | 2.70 | 3.05 |
| 2,1-regiodefects (matrix) | [mol-%] | 0.70 | 0.70 | 0.00 | 0.00 |
| $T_m$ | [°C] | 154 | 154 | 167 | 163 |
| $H_m$ | [J/g] | 82.0 | 71.3 | 104.0 | 88.0 |

The heterophasic propylene-ethylene copolymers were compounded in a co-rotating twin-screw extruder Coperion ZSK 47 at 220 °C.

HECO1 and HECO2 were each compounded with 2000 ppm of Irganox 225 (1:1-blend of Pentaerythrityl-tetrakis(3-(3',5'-di-tert.butyl-4-hydroxytoluyl)-propionate and tris (2,4-di-t-butylphenyl) phosphite), supplied by BASF AG, Germany, and 1000 ppm of calcium stearate, supplied by Croda, UK.

HECO3 was compounded with 1250 ppm of Calcium cis-1,2-cyclohexanedicarboxylate (Hyperform HPN-20E, supplied by Milliken, USA), 2000 ppm of Irganox 225 (1:1-blend of Pentaerythrityl-tetrakis(3-(3',5'-di-tert.butyl-4-hydroxytoluyl)-propionate and tris (2,4-di-t-butylphenyl) phosphite), supplied by BASF AG, Germany, and 1000 ppm of calcium stearate, supplied by Croda, UK.

HECO4 was compounded with 2000 ppm of Irganox 225 (1:1-blend of Pentaerythrityl-tetrakis(3-(3',5'-di-tert.butyl-4-hydroxytoluyl)-propionate and tris (2,4-di-t-butylphenyl) phosphite), supplied by BASF AG, Germany, and 1000 ppm of calcium stearate, supplied by Croda, UK, and the visbreaking agent Trigonox 101, supplied by Nouryon, Germany, having the effect of visbreaking the polymer to an $MFR_2$ of 1.30 g/10 min.

The properties of the pellets given in Table 1 are measured on the compounded pellets including the additives and post vis-break (for HECO4).

**2.2 Synthesis of propylene-butylene random copolymer (RACO)**

The catalyst used in the polymerization process for the propylene-butylene random copolymer composition (RACO) was prepared as follows:
The metallocene MC1 (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650.

The catalyst was prepared using metallocene MC1 and a catalyst system of MAO and trityl tetrakis(pentafluorophenyl)borate according to Catalyst 3 of WO 2015/11135 with the proviso that the surfactant is 2,3,3,3-tetrafluoro-2-(1,1,2,2,3,3,3-heptafluoropropoxy)-1-propanol.

**Table 2** Polymerization conditions for the RACO

|  |  | RACO |
|---|---|---|
| **Prepolymerization** |  |  |
| Temperature | °C | 20 |
| Residence time | min | 20 |
| **Loop reactor** |  |  |
| Temperature | °C | 75 |
| Feed H2/C3 ratio | [mol/kmol] | 0.1 |
| Feed C4/C3 ratio | [mol/kmol] | 29.9 |
| Split | [wt.-%] | 39 |
| $MFR_2$ | [g/10 min] | 2.0 |
| C4 content | [wt.-%] | 5.5 |
| **First GPR** |  |  |
| Temperature | [°C] | 80 |
| H2/C3 ratio | [mol/kmol] | 1.1 |
| C4/C3 ratio | [mol/kmol] | 60 |
| Split | [wt.-%] | 61 |
| **Pellet** |  |  |
| C4 total | [wt.-%] | 6.6 |
| 2,1-regiodefects | [mol-%] | 0.69 |
| $MFR_2$ | [g/10min] | 2.0 |
| Tm | [°C] | 139 |
| XCS | [wt.-%] | 0.71 |

## 2.3 Compounding of Inventive and Comparative Examples

The inventive heterophasic polypropylene compositions and comparative composition CE1 were compounded in a co-rotating twin-screw extruder Coperion ZSK 47 at 220 °C according to the recipes in Table 3. CE2 and CE3 were used without any further compounding steps.

The properties of the resultant compositions is also given in Table 3.

NU is ADK STAB NA-71, supplied by ADEKA Polymer Additives Europe, Germany and A is a combination of 1500 ppm of Irganox B215 (1:2-blend of Pentaerythrityl-tetrakis(3-(3',5'-di-tert.butyl-4-hydroxytoluyl)-propionate and tris (2,4-di-t-butylphenyl) phosphite), supplied by BASF AG, Germany, and 500 ppm of Hycite 713, a synthetic hydrotalcite, supplied by BASF AG, Germany.

The 50 $\mu$m cast films are produced on a Collin lab scale cast film line, with melt temperature of 250 °C, Chill temperature of 60 °C. The output rate is 8 kg/h.

**Table 3** Recipes and properties of inventive and comparative heterophasic polypropylene compositions

|  |  | IE1 | IE2 | IE3 | CE1 | CE2 | CE3 |
|---|---|---|---|---|---|---|---|
| HECO1 | [wt.-%] | - | 69.8 | 69.73 | 99.7 | - | - |
| HECO2 | [wt.-%] | 49.7 | - | - | - | - | - |
| HECO3 | [wt.-%] | - | - | - | - | 100 | - |
| HECO4 | [wt.-%] | - | - | - | - | - | 100 |
| RACO | [wt.-%] | 50 | 30 | 30 | - | - | - |
| NU | [wt.-%] | 0.10 | - | 0.07 | 0.10 | - | - |
| A | [wt.-%] | 0.20 | 0.20 | 0.20 | 0.20 | - | - |
| **Pellets** |  |  |  |  |  |  |  |
| $MFR_2$ | [g/10 min] | 1.52 | 2.30 | 2.30 | 1.61 | 3.00 | 1.30 |
| C2 | [wt.-%] | 3.1 | 2.1 | 2.1 | 3.1 | 4.5 | 6.2 |
| C4 | [wt.-%] | 3.3 | 2.0 | 2.0 | 0.0 | 0.0 | 0.0 |
| XCS | [wt.-%] | 16.6 | 10.1 | 10.4 | 14.0 | 13.9 | 15.0 |
| $T_c$ | [°C] | 121 | 117 | 124 | 125 | 130 | 115 |
| $T_{m1}$ | [°C] | 152 | 154 | 155 | 157 | 167 | 163 |
| $T_{m2}$ | [°C] | 130 | 130 | 137 | n/m | n/m | n/m |
| $H_{m1}$ | [J/g] | 68 | 81 | 86 | 85 | 104 | 88 |
| $H_{m2}$ | [J/g] | 6.0 | 0.5 | 1.4 | n/m | n/m | n/m |
| **Plaque** |  |  |  |  |  |  |  |
| Flex Mod | [MPa] | 990 | 1000 | 1280 | 1310 | 1400 | 1050 |
| NIS | [kJ/m$^2$] | 48.0 | 11.5 | 29.0 | 70.0 | 40.0 | 26.0 |
| **50 $\mu$m cast film** |  |  |  |  |  |  |  |
| Tens Mod (MD) | [MPa] | 650 | 620 | 630 | 1040 | 1290 | 720 |
| Tens Mod (TD) | [MPa] | 560 | 590 | 540 | 900 | 1150 | 570 |
| haze | [%] | 1.4 | 1.5 | 3.1 | 7.0 | 4.7 | 11.0 |
| SIT | [°C] | 120 | 123 | 124 | 131 | 142 | 136 |
| Tm-SIT | [°C] | 32 | 31 | 31 | 26 | 25 | 27 |
| n/m = not measurable |  |  |  |  |  |  |  |

As can be seen from the data in Table 3, the inventive compositions, being a combination of a heterophasic propylene-ethylene copolymer (HECO) and a propylene-butylene random copolymer (RACO) exhibit very favourable properties, in particular when formed into cast films.

The haze values of the cast films are much lower than the comparative examples (even without the use of the nucleating agent -see IE3), which represent typical grades used for this purpose in the art. Furthermore, the inventive examples exhibit generally low SIT, meaning that there is a beneficially high Tm-SIT gap. This is particularly useful when seeking to seal with the inventive films but avoiding deterioration/deformation of the film due to approaching the melting temperature.

In summary, the inventive compositions have improved optical/sealing properties when used in films, whilst the mechanical properties are maintained at useful levels.

**Claims**

1.  A heterophasic polypropylene composition (PC), comprising:

    i) from 40.0 to 90.0 wt.-%, relative to the total weight of the heterophasic polypropylene composition (PC), of a heterophasic propylene-ethylene copolymer (HECO) having a melt flow rate ($MFR_2$), determined according to ISO 1133 at 230 °C at a load of 2.16 kg, in the range from 1.0 to 5.0 g/10 min and a melting temperature ($T_m$), determined by differential scanning calorimetry (DSC), in the range from 149 to 160 °C, comprising:

    a) a crystalline matrix (M) being a propylene homopolymer having a content of 2,1-regiodefects as determined by quantitative $^{13}$C-NMR spectroscopy in the range from 0.05 to 1.40 mol-%; and
    b) an amorphous propylene-ethylene elastomer (E);

    wherein the heterophasic propylene-ethylene copolymer (HECO) is **characterized in** terms of its soluble fraction (SF) and crystalline fraction (CF) as determined by CRYSTEX QC analysis:

    i. from 60.0 to 95.0 wt.-%, based on the total weight of the heterophasic propylene-ethylene copolymer (HECO), of a crystalline fraction (CF) having an ethylene content C2(CF), as determined by quantitative IR spectroscopy, in the range from 0.0 to 2.0 wt.-%; and
    ii. from 5.0 to 40.0 wt.-%, based on the total weight of the heterophasic propylene-ethylene copolymer (HECO), of a soluble fraction (SF) having an ethylene content C2(SF), as determined by quantitative IR spectroscopy, in the range from 12.0 to 40.0 wt.-%;

    ii) from 10.0 to 60.0 wt.-%, relative to the total weight of the heterophasic polypropylene composition (PC), of a propylene-butylene random copolymer (RACO), having a melt flow rate ($MFR_2$), determined according to ISO 1133 at 230 °C at a load of 2.16 kg, in the range from 0.5 to 15.0 g/10 min and a content of 1-butylene, determined by quantitative $^{13}$C-NMR spectroscopic analysis, in the range from 1.0 to 10.0 wt.-%;
    iii) optionally, from 0.0001 to 1.0 wt.-%, relative to the total weight of the heterophasic polypropylene composition (PC), of a nucleating agent (NU); and
    iv) optionally, from 0.1 to 5.0 wt.-% of further additives (A) different to the nucleating agent (NU).

2.  The heterophasic polypropylene composition (PC) according to claim 1, wherein the soluble fraction (SF) of the heterophasic propylene-ethylene copolymer (HECO), according to CRYSTEX QC analysis, has an intrinsic viscosity (iV(SF)), determined according to DIN ISO 1628/1, October 1999 (in Decalin at 135 °C), in the range from 1.00 to 4.00 dL/g, and/or wherein the crystalline fraction (CF) of the heterophasic propylene-ethylene copolymer (HECO), according to CRYSTEX QC analysis, has an intrinsic viscosity (iV(CF)), determined according to DIN ISO 1628/1, October 1999 (in Decalin at 135 °C), in the range from 1.00 to 4.00 dL/g.

3.  The heterophasic polypropylene composition (PC) according to claim 1 or claim 2, wherein the heterophasic propylene-ethylene copolymer (HECO) has an ethylene content (C2), determined according to quantitative FT-IR spectroscopy, calibrated by quantitative $^{13}$C-NMR spectroscopy, in the range from 1.5 to 9.0 wt.-%.

4.  The heterophasic polypropylene composition (PC) according to any one of the preceding claims, wherein the propylene-butylene random copolymer (RACO) has a melting temperature ($T_m$), determined by differential scanning calorimetry (DSC), in the range from 120 to 145 °C, and/or a content of 2,1-regiodefects as determined by quantitative $^{13}$C-NMR spectroscopy in the range from 0.05 to 1.40 mol-%.

**5.** The heterophasic polypropylene composition (PC) according to any one of the preceding claims, wherein the propylene-butylene random copolymer (RACO) has a xylene cold soluble (XCS) content, determined according to ISO 16152, in the range from 0.1 to 10.0 wt.-%.

**6.** The heterophasic polypropylene composition (PC) according to any one of the preceding claims, having a melt flow rate (MFR$_2$), determined according to ISO 1133 at 230 °C at a load of 2.16 kg, in the range from 1.0 to 10.0 g/10 min.

**7.** The heterophasic polypropylene composition (PC) according to any one of the preceding claims, having an ethylene content (C2), determined by quantitative $^{13}$C-NMR spectroscopic analysis, in the range from 1.0 to 5.0 wt.-%, and/or a 1-butylene content (C4), determined by quantitative $^{13}$C-NMR spectroscopic analysis, in the range from 1.0 to 5.0 wt.-%.

**8.** The heterophasic polypropylene composition (PC) according to any one of the preceding claims, having a xylene cold soluble (XCS) content, determined according to ISO 16152, in the range from 5.0 to 20.0 wt.-%.

**9.** The heterophasic polypropylene composition (PC) according to any one of the preceding claims, having a crystallization temperature (T$_c$), determined by differential scanning calorimetry (DSC), in the range from 114.0 to 130.0 °C.

**10.** The heterophasic polypropylene composition (PC) according to any one of the preceding claims, having a first melting temperature (T$_{m1}$), determined by differential scanning calorimetry (DSC), in the range from 149 to 162 °C, preferably also having a second melting temperature (T$_{m2}$), determined by differential scanning calorimetry (DSC), in the range from 125 to 145 °C.

**11.** The heterophasic polypropylene composition (PC) according to any one of the preceding claims, having a sealing initiation temperature (SIT), determined on a 50 μm cast film sample, in the range from 115 to 130 °C, preferably wherein the difference between the first melting temperature of the heterophasic polypropylene composition (PC), determined by differential scanning calorimetry (DSC), and the sealing initiation temperature (SIT) is in the range from 28 to 40 °C.

**12.** The heterophasic polypropylene composition (PC) according to any one of the preceding claims, having either of, preferably both of, the following properties:

a) a flexural modulus, determined according to ISO 178 on 80×10×4 mm$^3$ injection-moulded specimens prepared according to ISO 19069-2, in the range from 850 to 2000 MPa; and
b) a Charpy Notched Impact Strength (NIS) measured according to ISO 179-1 eA at 23 °C on 80×10×4 mm$^3$ injection-moulded specimens prepared according to ISO 19069-2, in the range from 8.0 to 100 kJ/m$^2$.

**13.** The heterophasic polypropylene composition (PC) according to any one of the preceding claims, having a haze value, determined according to ASTM D1003 on a 50 μm cast film produced from the heterophasic polypropylene composition (PC), in the range from 0.0 to 6.0%

**14.** A process for producing the heterophasic polypropylene composition (PC) according to any one of the preceding claims, comprising the steps of:

a) providing the heterophasic propylene-ethylene copolymer (HECO) according to any one of claims 1 to 3, the propylene-butylene random copolymer (RACO) according to any one of claims 1, 4 or 5, the optional nucleating agent (NU) and optional further additives (A); and
b) blending and extruding the heterophasic propylene-ethylene copolymer (HECO), the propylene-butylene random copolymer (RACO), the optional nucleating agent (NU) and optional further additives (A) at a temperature in the range from 120 to 250 °C in an extruder, preferably a twin-screw extruder, thereby generating the heterophasic polypropylene composition (PC), preferably in pellet form.

**15.** A film, more preferably a cast film, comprising at least 90 wt.-%, more preferably at least 95 wt.-%, most preferably at least 98 wt.-% of the heterophasic polypropylene composition (PC) according to any one of the preceding claims.

**Patentansprüche**

1. Heterophasische Polypropylenzusammensetzung (PC), umfassend:

   i) 40,0 bis 90,0 Gew.-%, bezogen auf das Gesamtgewicht der heterophasischen Polypropylenzusammensetzung (PC), eines heterophasischen Propylen-Ethylen-Copolymers (HECO) mit einer Schmelzefließrate (MFR$_2$), bestimmt gemäß ISO 1133 bei 230°C bei einer Last von 2,16 kg, im Bereich von 1,0 bis 5,0 g/10 min und einer Schmelztemperatur (T$_m$), bestimmt durch Dynamische Differenzkalorimetrie (DSC), im Bereich von 149 bis 160°C, umfassend:

   a) eine kristalline Matrix (M), bei der es sich um ein Propylenhomopolymer mit einem durch quantitative $^{13}$C-NMR-Spektroskopie bestimmten Gehalt an 2,1-Regiodefekten im Bereich von 0,05 bis 1,40 Mol-% handelt; und
   b) ein amorphes Propylen-Ethylen-Elastomer (E);

   wobei das heterophasische Propylen-Ethylen-Copolymer (HECO) hinsichtlich seiner löslichen Fraktion (SF) und seiner kristallinen Fraktion (CF), wie durch CRYSTEX QC-Analyse bestimmt, gekennzeichnet ist:

   i. von 60,0 bis 95,0 Gew.-%, bezogen auf das Gesamtgewicht des heterophasischen Propylen-Ethylen-Copolymers (HECO), einer kristallinen Fraktion (CF) mit einem Ethylengehalt C2(CF), wie durch quantitative IR-Spektroskopie bestimmt, im Bereich von 0,0 bis 2,0 Gew.-%; und
   ii. 5,0 bis 40,0 Gew.-%, bezogen auf das Gesamtgewicht des heterophasischen Propylen-Ethylen-Copolymers (HECO), einer löslichen Fraktion (SF) mit einem Ethylengehalt C2(SF), wie durch quantitative IR-Spektroskopie bestimmt, im Bereich von 12,0 bis 40,0 Gew.-%;

   ii) 10,0 bis 60,0 Gew.-%, bezogen auf das Gesamtgewicht der heterophasischen Polypropylenzusammensetzung (PC), eines statistischen Propylen-Butylen-Copolymers (RACO) mit einer Schmelzefließrate (MFR$_2$), bestimmt gemäß ISO 1133 bei 230°C bei einer Last von 2,16 kg, im Bereich von 0,5 bis 15,0 g/10 min und einem 1-Butylengehalt, bestimmt durch quantitative $^{13}$C-NMR-spektroskopische Analyse, im Bereich von 1,0 bis 10,0 Gew.-%;
   iii) gegebenenfalls 0,0001 bis 1,0 Gew.-%, bezogen auf das Gesamtgewicht der heterophasischen Polypropylenzusammensetzung (PC), eines Nukleierungsmittels (NU); und
   iv) gegebenenfalls 0,1 bis 5,0 Gew.-% weiterer, vom Nukleierungsmittel (NU) verschiedener Additive (A).

2. Heterophasische Polypropylenzusammensetzung (PC) nach Anspruch 1, wobei die lösliche Fraktion (SF) des heterophasischen Propylen-Ethylen-Copolymers (HECO) gemäß der CRYSTEX QC-Analyse eine Grenzviskosität (iV(SF)), bestimmt gemäß DIN ISO 1628/1, Oktober 1999 (in Decalin bei 135°C), im Bereich von 1,00 bis 4,00 dl/g aufweist, und/oder wobei die kristalline Fraktion (CF) des heterophasischen Propylen-Ethylen-Copolymers (HECO) gemäß der CRYSTEX QC-Analyse eine Grenzviskosität (iV(CF)), bestimmt gemäß DIN ISO 1628/1, Oktober 1999 (in Decalin bei 135°C), im Bereich von 1,00 bis 4,00 dl/g aufweist.

3. Heterophasische Polypropylenzusammensetzung (PC) nach Anspruch 1 oder Anspruch 2, wobei das heterophasische Propylen-Ethylen-Copolymer (HECO) einen Ethylengehalt (C2), bestimmt gemäß quantitativer FT-IR-Spektroskopie, kalibriert durch quantitative $^{13}$C-NMR-Spektroskopie, im Bereich von 1,5 bis 9,0 Gew.-% aufweist.

4. Heterophasische Polypropylenzusammensetzung (PC) nach einem der vorangehenden Ansprüche, wobei das statistische Propylen-Butylen-Copolymer (RACO) eine Schmelztemperatur (T$_m$), bestimmt durch Dynamische Differenzkalorimetrie (DSC), im Bereich von 120 bis 145°C und/oder einen Gehalt an 2,1-Regiodefekten, bestimmt durch quantitative $^{13}$C-NMR-Spektroskopie, im Bereich von 0,05 bis 1,40 Mol-% aufweist.

5. Heterophasische Polypropylenzusammensetzung (PC) nach einem der vorangehenden Ansprüche, wobei das statistische Propylen-Butylen-Copolymer (RACO) einen an in kaltem Xylol löslichen (XCS) Gehalt, bestimmt gemäß ISO 16152, im Bereich von 0,1 bis 10,0 Gew.-% aufweist.

6. Heterophasische Polypropylenzusammensetzung (PC) nach einem der vorangehenden Ansprüche mit einer Schmelzefließrate (MFR$_2$), bestimmt gemäß ISO 1133 bei 230°C bei einer Last von 2,16 kg, im Bereich von 1,0 bis 10,0 g/10 min.

7. Heterophasische Polypropylenzusammensetzung (PC) nach einem der vorangehenden Ansprüche mit einem Ethylengehalt (C2), bestimmt durch quantitative $^{13}$C-NMR spektroskopische Analyse, im Bereich von 1,0 bis 5,0 Gew.-%, und/oder
einem 1-Butylengehalt (C4), bestimmt durch quantitative $^{13}$C-NMR spektroskopische Analyse, im Bereich von 1,0 bis 5,0 Gew.-%.

8. Heterophasische Polypropylenzusammensetzung (PC) nach einem der vorangehenden Ansprüche mit einem an in kaltem Xylol löslichen (XCS) Gehalt, bestimmt gemäß ISO 16152, im Bereich von 5,0 bis 20,0 Gew.-%.

9. Heterophasische Polypropylenzusammensetzung (PC) nach einem der vorangehenden Ansprüche mit einer Kristallisationstemperatur ($T_c$), bestimmt durch Dynamische Differenzkalorimetrie (DSC), im Bereich von 114,0 bis 130,0°C.

10. Heterophasische Polypropylenzusammensetzung (PC) nach einem der vorangehenden Ansprüche mit einer ersten Schmelztemperatur ($T_{m1}$), bestimmt durch Dynamische Differenzkalorimetrie (DSC), im Bereich von 149 bis 162°C, vorzugsweise auch mit einer zweiten Schmelztemperatur ($T_{m2}$), bestimmt durch Dynamische Differenzkalorimetrie (DSC), im Bereich von 125 bis 145°C.

11. Heterophasische Polypropylenzusammensetzung (PC) nach einem der vorangehenden Ansprüche mit einer Heißsiegelungsstarttemperatur (SIT), bestimmt an einer 50-um-Gießfolienprobe, im Bereich von 115 bis 130°C, wobei vorzugsweise die Differenz zwischen der ersten Schmelztemperatur der heterophasischen Polypropylenzusammensetzung (PC), bestimmt durch Dynamische Differenzkalorimetrie (DSC), und der Heißsiegelungsstarttemperatur (SIT) im Bereich von 28 bis 40°C liegt.

12. Heterophasische Polypropylenzusammensetzung (PC) nach einem der vorangehenden Ansprüche, die eine der folgenden Eigenschaften, vorzugsweise beide, aufweist:

a) einen Biegemodul, bestimmt gemäß ISO 178 an 80x10x4 mm$^3$ großen, spritzgegossenen Probekörpern, die gemäß ISO 19069-2 hergestellt wurden, im Bereich von 850 bis 2000 MPa; und
b) eine Charpy-Kerbschlagzähigkeit (NIS), gemessen gemäß ISO 179-1 eA bei 23°C an 80x10x4 mm$^3$ großen, spritzgegossenen Probekörpern, die gemäß ISO 19069-2 hergestellt wurden, im Bereich von 8,0 bis 100 kJ/m$^2$.

13. Heterophasische Polypropylenzusammensetzung (PC) nach einem der vorangehenden Ansprüche mit einem Haze-Wert, bestimmt gemäß ASTM D1003 an einer aus der heterophasischen Polypropylenzusammensetzung (PC) hergestellten 50-pm-Gießfolie, im Bereich von 0,0 bis 6,0 %.

14. Verfahren zur Herstellung der heterophasischen Polypropylenzusammensetzung (PC) nach einem der vorangehenden Ansprüche, umfassend die Schritte:

a) Bereitstellen des heterophasischen Propylen-Ethylen-Copolymers (HECO) nach einem der Ansprüche 1 bis 3, des statistischen Propylen-Butylen-Copolymers (RACO) nach einem der Ansprüche 1, 4 oder 5, des wahlweisen Nukleierungsmittels (NU) und wahlweiser weiterer Additive (A); und
b) Vermischen und Extrudieren des heterophasischen Propylen-Ethylen-Copolymers (HECO), des statistischen Propylen-Butylen-Copolymers (RACO), des wahlweisen Nukleierungsmittels (NU) und wahlweiser weiterer Additive (A) bei einer Temperatur im Bereich von 120 bis 250°C in einem Extruder, vorzugsweise einem Doppelschneckenextruder, wodurch die heterophasische Polypropylenzusammensetzung (PC), vorzugsweise in Pelletform, erzeugt wird.

15. Folie, bevorzugter eine Gießfolie, umfassend mindestens 90 Gew.-%, bevorzugter mindestens 95 Gew.-%, besonders bevorzugt mindestens 98 Gew.-% der heterophasischen Polypropylenzusammensetzung (PC) nach einem der vorangehenden Ansprüche.

## Revendications

1. Composition de polypropylène hétérophasique (PC) comprenant :

i) de 40,0 à 90,0 % en poids, par rapport au poids total de la composition de polypropylène hétérophasique (PC), d'un copolymère propylène-éthylène hétérophasique (HECO) ayant un indice de fluidité (MFR$_2$), déterminé selon ISO 1133 à 230 °C à une charge de 2,16 kg, dans la plage de 1,0 à 5,0 g/10 min et une température de fusion (T$_m$), déterminée par analyse calorimétrique différentielle (DSC), dans la plage de 149 à 160 °C, comprenant :

a) une matrice cristalline (M) étant un homopolymère de propylène présentant une teneur en 2,1-régiodéfauts telle que déterminée par une spectroscopie $^{13}$C-NMR quantitative dans la plage de 0,05 à 1,40 % mol. ; et

b) un élastomère propylène-éthylène amorphe (E) ; dans laquelle le copolymère propylène-éthylène hétérophasique (HECO) est caractérisé en termes de sa fraction soluble (SF) et de sa fraction cristalline (CF) telles que déterminées par analyse CRYSTEX QC :

i. de 60,0 à 95,0 % en poids, sur la base du poids total du copolymère propylène-éthylène hétérophasique (HECO), d'une fraction cristalline (CF) présentant une teneur en éthylène C2(CF), telle que déterminée par spectroscopie IR quantitative, dans la plage de 0,0 à 2,0 % en poids ; et

ii. de 5,0 à 40,0 % en poids, sur la base du poids total du copolymère propylène-éthylène hétérophasique (HECO), d'une fraction soluble (SF) présentant une teneur en éthylène C2(SF), telle que déterminée par spectroscopie IR quantitative, dans la plage de 12,0 à 40,0 % en poids ;

ii) de 10,0 à 60,0 % en poids, sur la base du poids total de la composition de propylène hétérophasique (PC), d'un copolymère aléatoire propylène-butylène (RACO), présentant un indice de fluidité (MFR$_2$), déterminé selon ISO 1133 à 230 °C à une charge de 2,16 kg, dans la plage de 0,5 à 15,0 g/10 min et une teneur en 1-butylène, déterminée par analyse spectroscopique $^{13}$C-NMR quantitative, dans la plage de 1,0 à 10,0 % en poids ;

iii) facultativement, de 0,0001 à 1,0 % en poids, sur la base du poids total de la composition de propylène hétérophasique (PC), d'un agent de nucléation (NU) ; et

iv) facultativement, de 0,1 à 5,0 % en poids d'autres additifs (A) différents de l'agent de nucléation (NU).

2. Composition de polypropylène hétérophasique (PC) selon la revendication 1, dans laquelle la fraction soluble (SF) du copolymère propylène-éthylène hétérophasique (HECO), selon l'analyse CRYSTEX QC, présente une viscosité intrinsèque (iV(SF)), déterminée selon DIN ISO 1628/1, octobre 1999 (en décaline à 135 °C), dans la plage de 1,00 à 4,00 dl/g, et/ou dans laquelle la fraction cristalline (CF) du copolymère propylène-éthylène hétérophasique (HECO), selon l'analyse CRYSTEX QC, présente une viscosité intrinsèque (iV(CF)), déterminée selon DIN ISO 1628/1, octobre 1999 (en décaline à 135 °C), dans la plage de 1,00 à 4,00 dl/g.

3. Composition de polypropylène hétérophasique (PC) selon la revendication 1 ou 2, dans laquelle le copolymère propylène-éthylène hétérophasique (HECO) présente une teneur en éthylène (C2), déterminée par spectroscopie FT-IR quantitative, étalonnée par spectroscopie $^{13}$C-NMR quantitative, dans la plage de 1,5 à 9,0 % en poids.

4. Composition de polypropylène hétérophasique (PC) selon l'une des revendications précédentes, dans laquelle le copolymère aléatoire propylène-éthylène (RACO) présente une température de fusion (T$_m$), déterminée par analyse calorimétrique différentielle (DSC), dans la plage de 120 à 145 °C, et/ou une teneur en 2,1-régiodéfauts telle que déterminée par spectroscopie $^{13}$C-NMR quantitative dans la plage de 0,05 à 1,40 % mol.

5. Composition de polypropylène hétérophasique (PC) selon l'une des revendications précédentes, dans laquelle le copolymère aléatoire propylène-éthylène (RACO) présente une teneur en fraction soluble à froid dans le xylène (XCS), déterminée selon ISO 16152, dans la plage de 0,1 à 10,0 % en poids.

6. Composition de polypropylène hétérophasique (PC) selon l'une des revendications précédentes, présentant un indice de fluidité (MFR$_2$), déterminé selon ISO 1133 à 230 °C à une charge de 2,16 kg, dans la plage de 1,0 à 10,0 g/10 min.

7. Composition de polypropylène hétérophasique (PC) selon l'une des revendications précédentes, présentant une teneur en éthylène (C2), déterminée par analyse spectroscopique $^{13}$C-NMR quantitative, dans la plage de 1,0 à 5,0 % en poids, et/ou

une teneur en 1-butylène (C4), déterminée par analyse spectroscopique $^{13}$C-NMR quantitative, dans la plage de 1,0 à 5,0 % en poids.

8. Composition de polypropylène hétérophasique (PC) selon l'une des revendications précédentes, présentant une teneur en fraction soluble à froid dans le xylène (XCS), déterminée selon ISO 16152, dans la plage de 5,0 à 20,0 % en poids.

9. Composition de polypropylène hétérophasique (PC) selon l'une des revendications précédentes, présentant une température de cristallisation ($T_c$), déterminée par analyse calorimétrique différentielle (DSC), dans la plage de 114,0 à 130,0 °C.

10. Composition de polypropylène hétérophasique (PC) selon l'une des revendications précédentes, présentant une première température de fusion ($T_{m1}$), déterminée par analyse calorimétrique différentielle (DSC), dans la plage de 149 à 162 °C, de préférence présentant également une deuxième température de fusion ($T_{m2}$), déterminée par analyse calorimétrique différentielle (DSC), dans la plage de 125 à 145 °C.

11. Composition de polypropylène hétérophasique (PC) selon l'une des revendications précédentes, présentant une température d'initiation de scellement (SIT), déterminée sur un échantillon de film coulé de 50 um, dans la plage de 115 à 130 °C, de préférence dans laquelle la différence entre la première température de fusion de la composition de polypropylène hétérophasique (PC), déterminée par analyse calorimétrique différentielle (DSC), et la température d'initiation de scellement (SIT) est dans la plage de 28 à 40 °C.

12. Composition de polypropylène hétérophasique (PC) selon l'une des revendications précédentes, présentant l'une, de préférence les deux, des caractéristiques suivantes :

a) un module de flexion, déterminé selon ISO 178 sur des spécimens moulés par injection de $80 \times 10 \times 4$ mm$^3$ préparés selon ISO 19069-2, dans la plage de 850 à 2000 MPa ; et
b) une résistance à l'essai de résilience Charpy (NIS) mesurée selon ISO 179-1 eA à 23 °C sur des spécimens moulés par injection de $80 \times 10 \times 4$ mm$^3$ préparés selon ISO 19069-2, dans la plage de 8,0 à 100 kJ/m$^2$.

13. Composition de polypropylène hétérophasique (PC) selon l'une des revendications précédentes, présentant une valeur de trouble, déterminée selon ASTM D1003 sur un film coulé de 50 $\mu$m produit à partir de la composition de polypropylène hétérophasique (PC), dans la plage de 0,0 à 6,0 %

14. Procédé de production de la composition de polypropylène hétérophasique (PC) selon l'une des revendications précédentes, comprenant les étapes consistant à :

a) fournir le copolymère propylène-éthylène hétérophasique (HECO) selon l'une des revendications 1 à 3, du copolymère aléatoire propylène-butylène (RACO) selon l'une des revendications 1, 4 et 5, de l'agent de nucléation (NU) facultatif et d'autres additifs (A) facultatifs ; et
b) mélanger et extruder le copolymère propylène-éthylène hétérophasique (HECO), du copolymère aléatoire propylène-butylène (RACO), de l'agent de nucléation (NU) facultatif et d'autres additifs (A) facultatifs à une température dans la plage de 120 à 250 °C dans une extrudeuse, de préférence une extrudeuse à double vis, en générant de ce fait la composition de polypropylène hétérophasique (PC), de préférence sous forme de granulés.

15. Film, de préférence un film coulé, comprenant au moins 90 % en poids, avec plus de préférence au moins 95 % en poids, avec le plus de préférence au moins 98 % en poids de la composition de polypropylène hétérophasique (PC) selon l'une des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020011825 A1
- WO 2018077663 A1
- WO 2020239598 A1
- WO 2016066446 A1
- EP 2960256 B1
- EP 2960279 B1
- WO 2013007650 A
- WO 201511135 A

**Non-patent literature cited in the description**

- **FILIP, X ; TRIPON, C ; FILIP, C.** *J. Mag. Resn,* 2005, vol. 176, 239
- **GRIFFIN, J.M ; TRIPON, C ; SAMOSON, A ; FILIP, C ; BROWN, S.P.** *Mag. Res. in Chem,* 2007, vol. 45 (S1), S198
- **CASTIGNOLLES, P ; GRAF, R ; PARKINSON, M ; WILHELM, M ; GABORIEAU, M.** *Polymer,* 2009, vol. 50, 2373
- **RESCONI, L ; CAVALLO, L ; FAIT, A ; PIEMONTESI, F.** *Chem. Rev.,* 2000, vol. 100, 1253
- **A.J. BRANDOLINI ; D.D. HILLS.** NMR spectra of polymers and polymer additives. Marcel Deker Inc, 2000
- **LJILJANA JEREMIC ; ANDREAS ALBRECHT ; MARTINA SANDHOLZER ; MARKUS GAHLEITNER.** Rapid characterization of high-impact ethylene-propylene copolymer composition by crystallization extraction separation: comparability to standard separation methods. *International Journal of Polymer Analysis and Characterization,* 2020, vol. 25 (8), 581-596